# EUROPÄISCHE PATENTANMELDUNG

(11) **EP 1 302 714 A2**
(43) Veröffentlichungstag der Anmeldung: **16.04.2003**
(21) Anmeldenummer: 02022618.9
(22) Anmeldetag: 09.10.2002
(51) Int. Cl.: F16L 31/00, F16L 25/00

(54) **Schlauchverbindung**

(30) Priorität: 13.10.2001 DE 20116872 U
(71) Anmelder: Küller, Günter, 42349 Wuppertal (DE)
(72) Erfinder: Küller, Günter, 42349 Wuppertal (DE)
(74) Vertreter: Ludewig, Karlheinrich, Dipl.-Ing.

(57) **Zusammenfassung**

Die Erfindung betrifft eine Schlauchverbindung zweier einander gegenüberliegenden Enden von elastischen Schläuchen, die an ihrem Endbereich einen nach außen weisenden Absatz tragen und mit einem Spannverschluss, der die beiden Schlauchenden lösbar zusammenhält, und die Absätze der Schlauchenden umfasst, hierbei weist der Spannverschluss Spannabschnitte auf, die durch ein Versschlussteil zusammengehalten sind.

Erfindungsgemäß tragen die Schlauchenden (10) jeweils eine Wulst (11), die radial nach außen weist, hierbei ist die Innenwandung der beiden Schläuche im Bereich der Wulst (11) ohne Verengung ausgebildet, so dass ein störungsfreier Fluss durch den Schlauch erfolgen kann (Fig. 1).

## Beschreibung

Die Erfindung betrifft eine Schlauchverbindung zweier einander gegenüberliegenden Enden von elastischen Schläuchen, die in ihrem Endbereich einen nach außen weisenden Absatz trägen und mit einem Spannverschluss, der die beiden Schlauchenden lösbar zusammenhält und die Absätze der Schlauchenden umfasst, hierbei weist der Spannverschluss Spannabschnitte auf, die durch ein Verschlussteil zusammengehalten sind.

Derartige Schlauchverbindungen werden häufig verwendet. Sie werden bei Schläuchen eingesetzt, mit denen Gase, Flüssigkeiten oder Feststoffe befördert werden. Der am Ende eines Schlauches vorgesehene Abschnitt - eine Tülle - wird üblicherweise kraftschlüssig im Schlauch gehaltert, wobei der senkrechte Abschnitt zur Verbindung mit einem weiteren Schlauch vorgesehen ist und von dem Spannverschluss übergriffen wird. Die beiden Schlauchenden werden hierbei gegeneinander abdichtend gepresst.

Die Schläuche weisen eine Durchmesser von wenigstens 60 mm, insbesondere 100 mm - 250 mm auf. Sie sind starken Belastungen unterworfen. Durch den eingesetzten kraftschlüssig gehalterten Abschnitt und der dadurch bedingten Verengung des Schlauchinneren entstehen bei der Schlauchverbindung Stauprobleme, so dass beim Transport von Feststoffen es leicht zu Verstopfungen kommen kann.

Aufgabe der Erfindung ist es daher, eine Schlauchverbindung der eingangs genannten Art so zu gestalten, dass einerseits eine sichere Halterung zweier Schlauchenden gewährleistet ist, andererseits im Schlauchinneren keine Einengung entsteht. Schließlich soll eine leichte und einfache Befestigungsmöglichkeit gegeben sein.

Diese Aufgabe wird erfindungsgemäß dadurch gelöst, dass die Schlauchenden jeweils eine Wulst tragen, die radial nach außen weist und dass die Innenwandung der beiden Schläuche im Bereich der Wulst ohne Verengung ausgebildet ist. Derartige Ausbildungen erlauben eine sichere und schnelle Befestigung über den Spannverschluss, darüber hinaus bietet die Wulst eine sichere Halterung der beiden Schlauchenden. Der Transport durch die Schläuche kann ohne Hindernisse erfolgen.

Bei einem besonderen Ausführungsbeispiel der Erfindung sind die Wülste an den Schlauchenden angeformt. Durch diese Anformung ergibt sich eine leichte und sichere Herstellung, da der Schlauch mit der Wulst in einem Arbeitsgang herstellbar ist. Vorteilhafterweise trägt die Wulst in ihrem Inneren einen Verstärkungsring. Der Verstärkungsring schließlich gestattet, dass die beiden Schlauchenden sicher über den Spannverschluss gegeneinander gedrückt werden und dass die beiden Schlauchenden abdichtend aneinander liegen.

Bei einem anderen Ausführungsbeispiel der Erfindung ist die Wulst nachträglich am Schlauchende, insbesondere durch Schweißen, Kleben oder Schrauben befestigbar, um so eine sichere Halterung zu gewähren. Bei einem solchen Ausführungsbeispiel ist es möglich, die Wülste aus einem anderen Material herzustellen als die Schläuche, beispielsweise die Wülste aus Kunststoff und die Schläuche aus Gummi. Durch eine Klebe- oder Schweißverbindung ist eine sichere feste und abdichtende Halterung möglich. Die Schraubverbindung gestattet darüber hinaus noch eine sichere Festlegung der Wulst am Schlauch. Empfehlenswerterweise trägt die Wulst eine sich in Richtung der Schlauches erstreckende Manschette, die am Schlauch festgelegt ist. Hierdurch greift die Wulst mit einer größeren Fläche am Schlauchende an, so dass die Halterung noch verbessert wird. Vorteilhafterweise trägt hierbei die Manschette zumindest bereichsweise einen Gewindeabschnitt, um so eine sichere Festlegung von Wulst und Schlauch zu erreichen.

Bei einem besonderen Ausführungsbeispiel der Erfindung trägt der Schlauch an seinem Außenumfang eine gewindeartig verlaufende Erhebung und dass die Manschette an ihrem Innenmantel eine gewindeartig verlaufende Vertiefung aufweist, in die die Erhebung eingreift. Auf diese Weise kann zur Befestigung von dem Schlauch an die Manschette eine Gewindeverbindung benutzt werden und zwar dadurch, dass die Manschette auf den Schlauch geschraubt wird. Durch die Gewindeverbindung ergibt sich bereits eine sichere Halterung. Um die Festigkeit weiter zu erhöhen, empfiehlt es sich, die gewindeartig am Außenumfang des Schlauches verlaufende Erhebung als Einlage aus Hart-PVC aufzubauen, um so innerhalb der Manschette einen festen Widerstand zu haben. Bei einem anderen Ausführungsbeispiel der Erfindung ist die gewindeartig verlaufende Erhebung am Außenmantel des Schales als ummantelter eingebetteter Draht ausgebildet. Durch diese Anordnung ergibt sich für die gewindeartige Erhebung eine größere Härte, so dass der Schlauch sicher in die Manschette mit Wulst eingeschraubt werden kann. Durch den Draht wird weiterhin sichergestellt, dass der Schlauch selber mit stärkerem Drücken belastet werden kann, da der Draht eine Ausdehnung des Umfanges des Schlauches verhindert. Vorteilhafterweise sind Wulst und Manschette und/oder der Schlauch aus Kunststoff oder Gummi aufgebaut, um so eine einfachere Herstellung zu erhalten und die Befestigung von Wulst und Manschette an den Schlauch weiter zu vereinfachen. Es ist auch möglich, Wulst und Schlauch getrennt aus Gummi herzustellen und durch nachträgliches Anvulkanisieren zu befestigen. Empfehlenswerterweise weisen wenigstens eine der beiden zugewandten Seiten zweier benachbarter Wülste einen gummielastischen Dichtungsring auf, um so bei Befestigung durch den Spannverschluss eine sichere Abdichtung zwischen zwei Schläuchen zu erhalten, hierbei hindern die Dichtungsringe selber nicht die Festigkeit des Verschlusses, da sie teilweise in einer Aufnahme der Wülste Platz finden. Um zu verhindern, dass der Schlauch zu weit in die Wulst geschraubt werden kann, ist am Innenmantel, der als Bauteil am Schlauch festlegbaren Wulst ein radial zum Innenmantel sich erstreckender rundumlaufender Anschlag als Begrenzung für die Einfuhrbewegung des Schlauches angeordnet, zugleich ist der Anschlag so ausgebildet, dass an der Übergangsstelle zwischen den beiden Schläuchen keine Erhebung oder Vertiefung auftritt, so dass ein gleichmäßiger Fluss eines Mediums über die Verbindungsstelle möglich ist. Der Anschlag gewährt darüber hinaus eine größere Festigkeit der Wulstanordnung.

Die radiale Erstreckung des Anschlages entspricht der Dicke des Schlauches zur Vermeidung von Turbolenzen oder Strömungsstörungen bei Durchströmen von Medien im Schlauch, da ein glatter Übergang an der Verbindungsstelle gegeben ist.

Um die Festigkeit der Schlauchverbindung weiter zu erhöhen, erstreckt sich die Manschette mit einer Länge am Schlauch, die eine Verformung zweier Schläuche an ihrer Verbindungsstelle verhindern. Es ist weder ein Abknicken noch eine Biegung an der Verbindungsstelle möglich. Durch eine solche Verformung könnte unter Umständen die Wulst von dem Schlauch getrennt werden. Um die Festigkeit der Schlauchverbindung weiter zu erhöhen, ist zwischen Manschette und Schlauch im Bereich der gewindeartigen Erhebung und Vertiefung eine Klebeschicht vorgesehen. Diese Klebeschicht legt Wulst und Manschette noch sicherer zusätzlich zur Schraubverbindung fest. Darüber hinaus ist gewährleistet, wenn die Klebeschicht eine zum Aushärten benötigt, dass durch Aufschraubung von Wulst und Manschette auf den Schlauch ein flüssiges Gleitmittel gegeben ist. Hierdurch wird das Aufschrauben der Manschette erleichtert, so dass die wirklich feste Verbindung erst nach dem Aushärten der Klebeschicht gegeben ist.

Bei einem besonderen Ausführungsbeispiel der Erfindung tragen die Schläuche in ihrem Mantel eine Metallspirale, die sich bis in die Wulst hinein erstreckt und an dem Verstärkungsring befestigt ist, insbesondere durch eine Schweißverbindung. Insbesondere können zur Vulkanisation Spirale und Verstärkungsring gemeinsam in die Form gelegt werden. Diese Maßnahme erlaubt eine sichere Ausbildung der Schlauchverbindung. Mit dem Schlauch können sowohl Feststoffe als auch Flüssigkeit und Gase im Saug- und Druckbetrieb gefördert werden, ohne dass befürchtet werden muss, dass der Schlauch einknickt oder abreißt. Schließlich ist die Verbindung über die Befestigung so sicher gestaltet, dass selbst, wenn die Schläuche vertikal hängen, keine Undichtigkeit oder Abreißen erfolgen kann.

Empfehlenswerterweise weisen die Schläuche in ihrem Mantel ein Geflecht, sei es ein Textilgeflecht oder ein Metallgeflecht auf, das bis in die Wulst hinein sich erstreckt. Hierdurch können die zu transportierenden Mittel mit Druck oder Saugen befördert werden, ohne dass befürchtet werden muss, dass der Schlauch an einer Stelle einknickt. Bei einem besonderen Ausführungsbeispiel trägt die Wulst in ihrem Inneren einen Verstärkungsring, der im axialen Schnitt rechteckig oder rund gestaltet ist. Durch die rechteckige Gestaltung ist eine sichere Pressung der Wulst des einen Schlauchendes an der Wulst des anderen Schlauchendes gegeben, da die Druckübertragung bei Anlegen des Spannverschlusses auf einen relativ großen Bereich erfolgt. Bei einem besonderen Ausführungsbeispiel ist der Verstärkungsring aus Endbereichen der Spirale und/oder des Geflechtes aufgebaut. Dieses erlaubt eine einfache Herstellung, da keine besondere Schweißverbindung zur Verbindung von Metallgeflechten oder Metallspiralen mit dem Verstärkungsring erforderlich ist, da vor dem Vulkanisieren durch Verformung der Spirale oder des Geflechtes jeweils an ihrem Ende eine ringförmige Erweiterung als Verstärkungsring, die so groß gestaltet ist, dass sie bis in die Wulst hinein reicht, so dass dann die Endvulkanisierung vorgenommen werden kann.

Von Vorteil ist es weiterhin, wenn die beiden Enden eines Schlauches gleich ausgebildet sind und jeweils eine Wulst aufweisen. Da hierdurch die Gewähr gegeben ist, dass bei Ansetzen mehrerer Schläuche, unabhängig von der Lage der Schläuche, beide Seiten miteinander befestigbar sind.

Um den Spanndruck bei der Befestigung durch den Spannverschluss zu erhöhen, weisen die Wülste auf der dem Schlauchende abgewandten Seite eine Anpressschräge für den Spannverschluss auf, so dass beim Anlegen des Spannverschlusses die beiden Wülste fest aneinander gegeneinander geführt und gepresst werden und somit eine sichere Abdichtung gewährleistet ist.

Bei einem besonderen Ausführungsbeispiel der Erfindung trägt der wenigstens zweigeteilte Spannverschluss eine in Achsrichtung des Schlauches sich erstreckende, vom Schlauchende wegweisenden manschettenartige Verlängerung auf, hierbei umgreifen die Verlängerungen den Schlauch. Durch die manschettenartige Verlängerung wird gewährleistet, dass im Bereich der Wulst keine Abknickung des Schlauches auftritt. Zugleich wird erreicht, dass beispielsweise bei einer pneumatischen Förderung von Feststoffen oder Flüssigkeiten sich der Schlauch fest gegen die manschettenartige Verlängerung drückt, so dass ein guter Übergang von dem einen Schlauch zu dem anderen Schlauch möglich ist. Schließlich erhält der Schlauch im Bereich seiner Befestigung mit einem anderen Schlauch einen Schutz gegen Knickung.

Bei einem besonderen Ausführungsbeispiel der Erfindung ist der Spannverschluss als Spritzgussteil aufgebaut. Diese Maßnahme erlaubt einen preiswerten Herstellungsvorgang, insbesondere dann, wenn eine Vielzahl von Spannverschlüssen verwendet werden sollen.

Um die Bedienung der Schlauchverbindungen noch zu erleichtern, empfiehlt es sich, dass der Spannverschluss einen einzigen Verschlusshebel trägt, der in axialer Richtung des Spannverschlusses mittig an dem Spannabschnitt angeordnet ist. Durch die mittige Anordnung ergibt sich eine sichere Befestigung, da die Zugkraft für den Spannverschluss genau mittig in Achsrichtung sich nach beiden Seiten erstreckt. Es ergibt sich eine sichere Halterung. Bei einem vorteilhaften Ausführungsbeispiel der Erfindung ist der Verschlusshebel des aus drei Spannabschnitten bestehenden Spannverschlusses etwa gleich lang wie der Umfang eines Spannabschnittes. Durch diese Möglichkeit ergibt sich eine sichere Befestigung, insbesondere können bei der Spannvorrichtung die auftretenden Kräfte sicher bewältigt werden, da durch die Länge von 1/3 des Umfanges der Hebel eine ausreichende Länge zur Bewegung gegeben ist. Um sicherzustellen, dass bei der Befestigung des Spannverschlusses mit mehreren Schläuchen dieser nicht ohne Weiteres gelöst werden kann, empfiehlt es sich, das freie Ende des Verschlusshebels am Spannabschnitt gegen eine unbeabsichtigte Bewegung des Verschlusshebels über ein Sicherungsteil festzulegen. Dieses Sicherungsteil könnte beispielsweise auch ein Schloss sein, um so zu verhindern, dass mutwillig ein Lösen durchführbar ist.

Bei einem weiteren Ausführungsbeispiel der Erfindung ist der an einem Spannabschnitt schwenkbar gelagerte Verschlusshebel mit einem schwenkbaren Stahldrahtverschlussbügel ausgestattet, der mit einem Bügelabschnitt einen am benachbarten Spannabschnitt vorgesehenen Keilvorsprung in der Verschlussstellung des Verschlusses federnd hintergreift. Durch dieses federnde Hintergreifen ist eine konstante Spannung innerhalb des Spannverschlusses möglich, so dass die Verschlussstellung sicher einstellbar bleibt. Vorteilhafterweise ist hierbei der Stahldrahtbügel U-fömig gestaltet, hierbei weisen die beiden Schenkel jeweils eine Federwindung auf, durch die bei Befestigung der Mittelsteg des Stahldrahtbügels federnd den Keilvorsprung hintergreift. Durch diese Ausbildung ist eine Art Verschluss geschaffen, der, wie bei früherem Flaschenverschlüssen, ausgebildet ist und der eine sichere Halterung, trotzdem aber eine leichte Öffnung gewährleistet. Um im Bedarfsfall den Spannverschluss oder sogar den Spannverschluss selber aufhängen oder befestigen zu können, empfiehlt es sich, dass der Verschluss selber einen Aufhängeabschnitt aufweist, durch die eine Befestigung möglich ist. Bei einem weiteren Ausführungsbeispiel der Erfindung sind benachbarte Spannabschnitte schwenkbar aneinander gelagert, hierbei weisen die beiden Spannabschnitte eine gemeinsame Lagerbohrung auf, die von einer Achse durchgriffen wird. Diese Ausbildung gestattet eine sichere Befestigung der einzelnen Spannabschnitte. Von weiterem Vorteil ist es hierbei, dass auch die beiden Spannabschnitte, die durch den Spannverschluss selber zusammengehalten werden, über diese Achse aneinander befestigt werden, so dass selbst bei einem Lösen des Verschlusshebels der Spannverschluss selber sicher um den Schlauch angeordnet ist.

Empfehlenswerterweise ist der Außendurchmesser des Schlauches gleich dem Innendurchmesser der manschettenartigen Verlängerung, um so eine genaue Anlage des Schlauches an der Verlängerung zu erzielen.

Bei einem besonderen Ausführungsbeispiel der Erfindung trägt die manschettenartige Verlängerung das Verschlussteil für den Spannverschluss, so dass der Verschluss über die Wulst mit dem Spannabschnitt in axialer Richtung gesehen nicht hervorragt.

Hierbei ist es empfehlenswert, dass die Lagerstellen des Verschlussteiles aus Abbiegungen der Manschette selber hergestellt sind.

Bei einem besonderen Ausführungsbeispiel der Erfindung besteht die Gelenkstelle zweier Spannabschnitte aus an der Berührstelle der Manschettenverlängerungen vorgesehenen zylinderartig gebogenen Laschen, in die ein Lagerstift eingesetzt werden kann. Durch einfache Biegung von an der Manschettenverlängerung angeformten Laschen entsteht somit eine Lagerstelle für die Gelenkstelle zweier Spannabschnitte. Vorteilhafterweise weisen im Bereich der Gelenkstelle die Enden der Spannabschnitte einen Anschlag zur Begrenzung der Schwenkbewegung der Spannabschnitte auf. Durch diese Maßnahme wird festgelegt, dass der Spannabschnitt beim Umlegen um die Wülste zweier Schläuche nicht vollständig aufgeklappt ist, sondern nur teilweise, so dass ein leichtes Aufschieben des Spannverschlusses auf die Wulst gegeben ist, so dass dann lediglich nur noch das Verschlussteil betätigt werden muss.

Hierbei empfiehlt es sich, dass die beiden Verschlusshebel an der Manschettenverlängerung über ein Griffteil miteinander verbunden sind, um so durch einen einzigen Handgriff eine Öffnung oder Schließung des Verschlussteiles vornehmen zu können.

Bei einem besonderen Ausführungsbeispiel der Erfindung weisen die Verschlusshebel eine Aufnahme für ein Verlängerungsteil des Hebels auf zur lösbaren Festlegung des Verlängerungsteiles. Eine solche Maßnahme empfiehlt sich dann, wenn sichergestellt werden soll, dass bei der Befestigung später kein Verschlussteil oder Verschlusshebel hervorsteht. Die Lösung des Verschlussteiles erfolgt dann, indem das Verlängerungsteil wieder in die Aufnahme eingeführt wird. Von weiterer Bedeutung ist es hier, dass je nach Verlängerung der Verschlussteil leicht in seine Schließoder Öffnungsstellung bewegt werden kann, da auf Grund der Länge des Verlängerungsteiles eine große Hebelwirkung entsteht. Weiterhin ist zu berücksichtigen, dass das Verlängerungsteil etwa tangential an dem Verschlussteil angreift, so dass bei genügender Länge bei Betätigung des Verschlusses zu dessen Betätigung genügend Raum besteht, ohne dass sich ein Benutzer die Finger verletzt. Bei einem besonderen Ausführungsbeispiel der Erfindung ist der Verlängerungsteil gabelförmig ausgebildet und je eine Gabelzinke in die Aufnahme einführbar. Hierdurch kann wiederum mit einem einzigen Griff ein Lösen des Verschlussteiles oder eine Befestigung über das Verschlussteil erfolgen. Es ist an dem Verlängerungsteil auch später genügend Raum, um das gabelförmige Verlängerungsteil sicher bedienen zu können. Außerdem kann durch Verlängerung des Verlängerungsteil die Kraft zur Betätigung des Verschlussteiles reduziert werden.

Auf den Zeichnungen ist der Erfindungsgegenstand in mehreren Ausführungsbeispielen dargestellt und zwar zeigen:

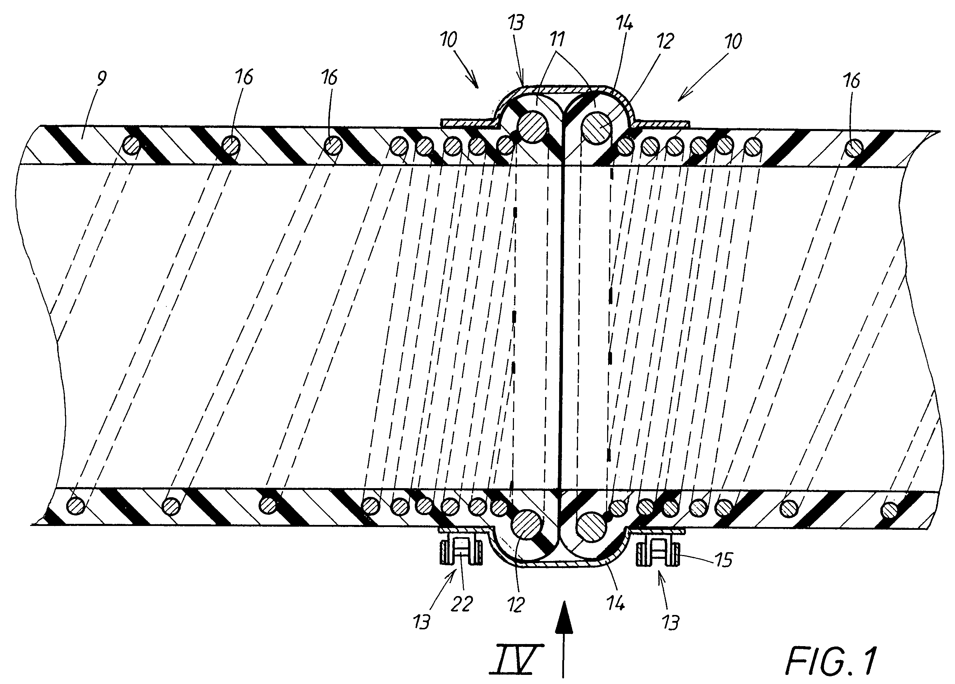

- Fig. 1: zwei mit einem Spannverschluss festgelegte Schlauchenden,
- Fig. 2: das eine Schlauchende mit Wulst,
- Fig. 3: ein anderes Ausführungsbeispiel des Schlauchendes mit Wulst,
- Fig. 4: eine Draufsicht auf den Bandverschluss mit zwei Schlauchenden, gemäß Pfeil IV in Fig. 1,
- Fig. 5: eine Seitenansicht des Spannverschlusses mit Spann-Abschnitt gemäß Pfeil V in Fig. 4.
- Fig. 6: eine Draufsicht auf den Bandverschluss mit zwei Schlauchenden an der Gelenkstelle,
- Fig. 7: einen Ausschnitt einer Seitenansicht der Gelenkstelle gemäß Fig. 6,
- Fig. 8: eine Draufsicht auf zwei Spannabschnitte an ihrer Gelenkstelle vor dem Zusammenbau,
- Fig.: 9 eine Draufsicht auf den Bandverschluss mit zwei Schlauchenden mit einem Griffteil zur Bedienung der beiden Verschlusshebel,
- Fig. 10: eine Seitenansicht gemäß Pfeil X der Fig. 9 auf den Schlauch mit Bandverschluss,
- Fig. 11: eine Draufsicht auf den Bandverschluss mit zwei Schlauchenden mit einem gemeinsamen Griffteil für die Verschlusshebel,
- Fig. 12: eine Seitenansicht gemäß Pfeil XII der Fig. 11 im Schnitt,
- Fig. 13: im Schnitt ein weiteres Ausführungsbeispiel zweier aneinanderliegender Schlauchenden,
- Fig. 14: einen Schnitt durch ein weiteres Ausführungsbeispiel zweier aneinanderliegender Schlauchenden,
- Fig. 15: eine für den Verschluss dienende Wulst mit Manschette,
- Fig. 16: eine Draufsicht auf den Verschlussteil mit einem Stahldrahtbügel,
- Fig. 17: den Spannverschluss im aufgeklappten Zustand ohne Schlauch.

Die in den Zeichnungen dargestellte Schlauchverbindung besteht aus einem verschleißfesten und abriebfesten Gummi, um so aggressive und abrasive Feststoffe bzw. Flüssigkeiten fördern zu können. Die Schlauchenden 10 weisen an ihren Enden Wülste 11 auf. Hierbei ist im Inneren des Wulstes 11 ein Verstärkungsring 12 angeordnet. Im Mantel des Schlauches befinden sich Metallspiralen 16, um so den Schlauch eine genügende Festigkeit zu geben und damit dieser sowohl einen Saug- und einen Druckbetrieb aushält.

Die Spiralenden sind mittels einer Schweiß- oder Lötverbindung an dem Verstärkungsring 12 festgelegt (wie dargestellt).

Die beiden Schlauchenden 10 werden durch den Spannverschluss zusammengehalten und zwar derart, dass die beiden Wülste in Achsrichtung des Schlauches gesehen aneinander gepresst gehalten sind.

Der Spannverschluss 13 besteht aus mehreren Spannabschnitten 14, die über eine Gelenkstelle 27 miteinander verbunden sind und die die beiden Wülste 11 übergreifen. Die freien Enden der Spannabschnitte 14 tragen im Bereich einer manschettenartigen Verlängerung 17 ein Verschlussteil 15, mit der der Spannverschluss 13 um die Schläuche herum befestigbar ist.

Wie schon erwähnt, ist der Spannverschluss 13 mit manschettenförmigen Verlängerungen 17 versehen, die sich in Achsrichtung des Schlauches 9 erstrecken, hierbei ist im befestigten Zustand des Spannverschlusses 13 die manschettenartige Verlängerung 17 auf den Schlauch 9 liegend angeordnet. Die Verlängerungen 17 dienen dazu, dass im Bereich der Wülste 11 keine Abknickung des Schlauches 9 vorkommen kann, außerdem soll noch eine größere Abdichtung der Schlauchverbindung erreicht werden, um sicherzustellen, dass bei Bewegung des Schlauches die Wülste sicher aneinander liegen, außerdem dienen die axialen Verlängerungen zur Festlegung und Halterung der Verschlussteile 15.

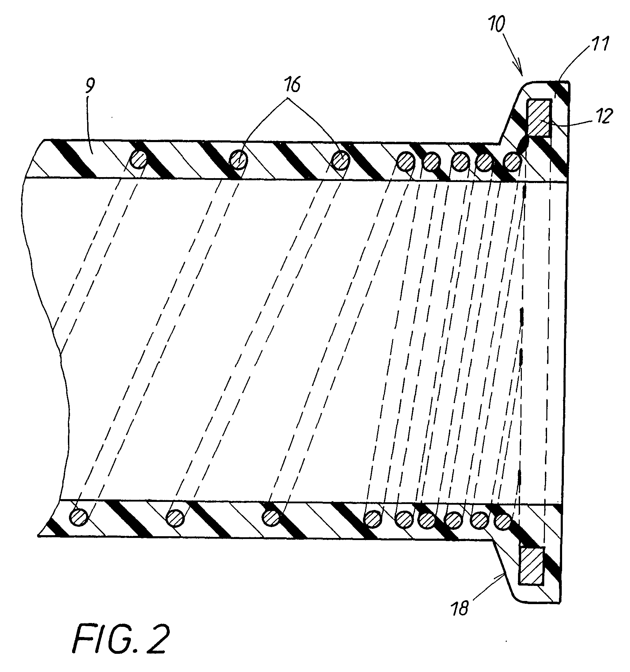

Bei dem Ausführungsbeispiel nach Fig.2 ist der Verstärkungsring 12 im Querschnitt gesehen, rechteckig ausgebildet. Durch diese rechteckige Gestaltung des Verstärkungsringes 12 werden die beiden Wülste 11 von zwei Schlauchenden her fest aneinander gedrückt. Es sei hier noch erwähnt, dass die Wulst auf der dem Schlauchende weggewandten Seite eine Andrückfläche 18 aufweist. Durch diese Andrückfläche, die schräg gestaltet ist, werden über den Spannverschluss 13 zwei Wülste fest gegeneinander abdichtend zusammengepresst, da der Spannverschluss an diesen Andrückflächen entlang gleitet.

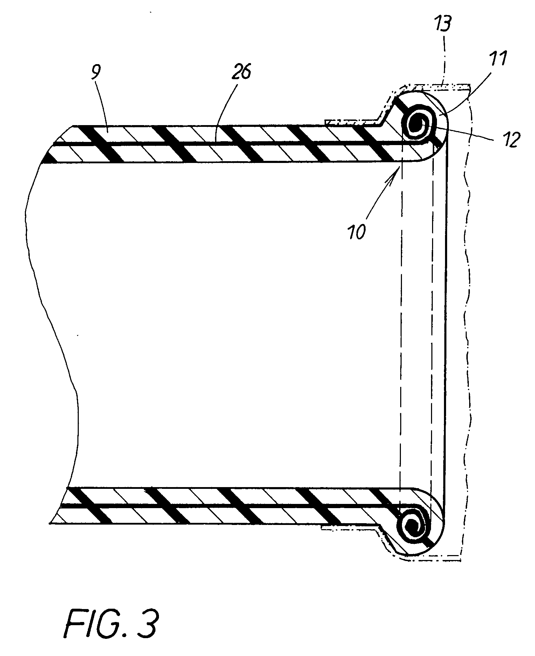

Bei dem Ausführungsbeispiel nach Fig. 3 ist an Stelle der Metallspirale im Mantel des Schlauches ein Gewebe 26, vorzugsweise ein Metallgewebe, vorgesehen. Dieses Metallgewebe ist im Bereich der Wulst 11 zusammengewickelt, um einen Verstärkungsring 12 zu bilden.

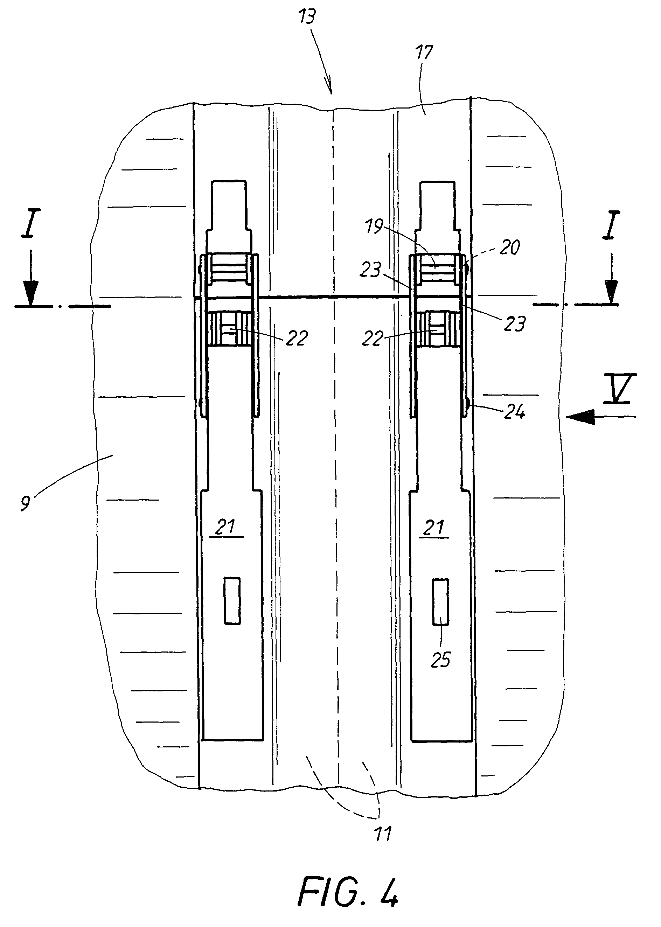

Durch den Spannverschluss 13 werden wiederum zwei Schlauchenden 10 sicher aneinandergedrückt, wobei der Spannabschnitt im Bereich der Andrückfläche 18 ebenfalls schräg gestaltet ist, um so besser eine Presswirkung ausüben zu können. Bei dem Ausführungsbeispiel nach Fig. 4 ist der Spannverschluss 13 größer dargestellt. Der Spannverschluss 13 liegt jeweils auf den Wülsten 11 und der manschettenförmigen Verlängerung 17. Hierbei trägt das eine Ende des Spannabschnittes eine stabförmige Halterung 19, die von einem Haken 20, der am anderen freien Ende des Spannabschnittes 14 angeordnet sind, hintergriffen wird. Zur Lösung des Spannverschlusses ist ein um eine Achse 22 schwenkbarer Verschlusshebel 21 vorgesehen. Dieser Verschlusshebel trägt im Abstand von der Achse des Verschlusshebels zwei gelenkig angeordnete Platten 23, die an ihrem freien Ende Haken 20 tragen, die die stabförmige Halterung 19 hintergreifen. Bei der Schwenkbewegung um die Achse 22 werden die stabförmige Halterung und die Achse 22 des Verschlusshebels aneinandergezogen, so dass unter Spannung ein Spannverschluss um die Wülste angeordnet ist.
Die Achse 24 der Platten 23 liegt radial gesehen bzgl. Des Schlauches unterhalb der Achse 22 des Verschlusshebels, so dass der Spannhebel allein durch den Spannzug in seiner Lage verbleibt. Zur Festlegung des Spannhebels 21 ist noch eine Öse 25 vorgesehen. Diese Öse wird durch einen Stift od.dgl. gesichert, so dass der Verschlusshebel nicht bewegt werden kann.

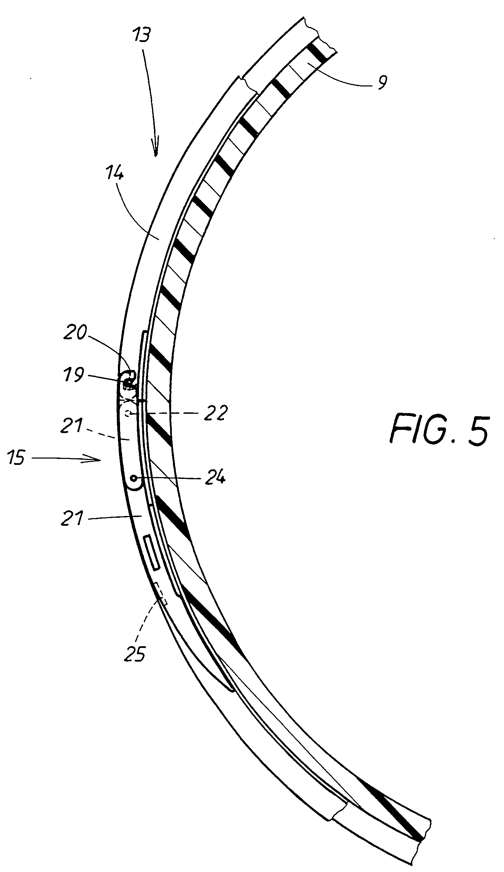

In Fig. 5 ist in Seitenansicht der Spannverschluss näher dargestellt. Die Funktionsweise wurde bereits erläutert. Hervorzuheben ist noch, dass radial gesehen der Verschlussteil 15 mit Verschlusshebel 21, Platten 23 und Halterung 19 nicht über die Wulst ragt.

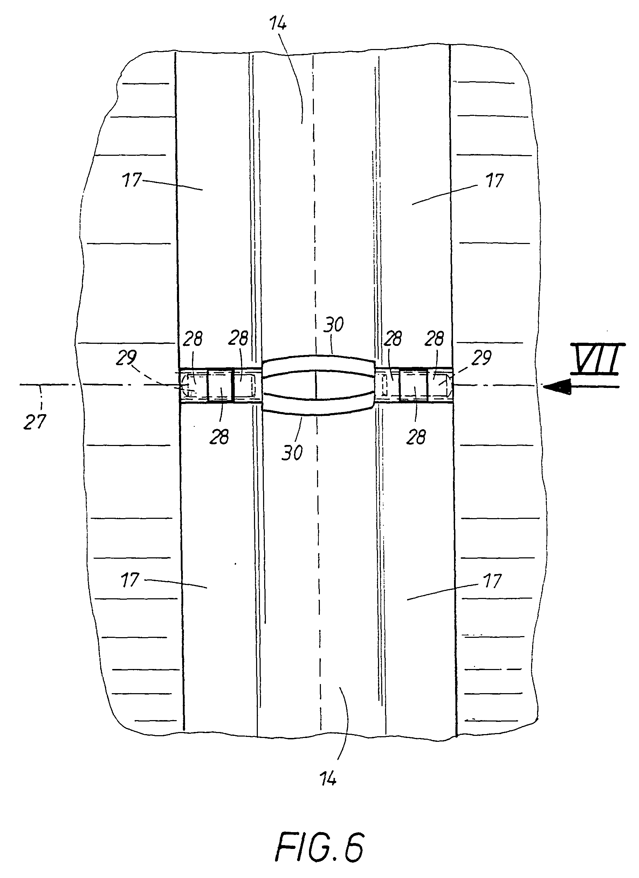

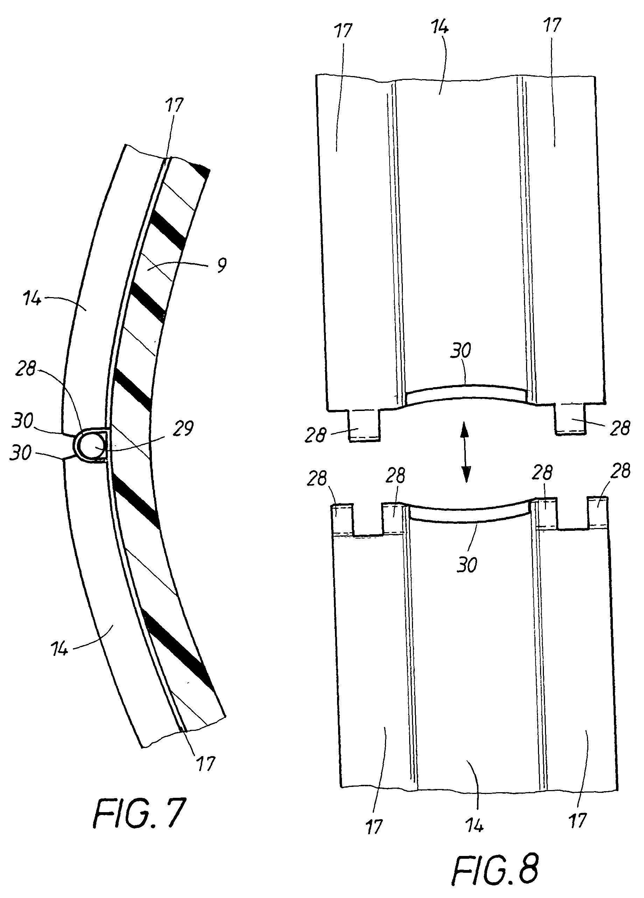

Bei den Ausführungsbeispielen nach Fig. 6 bis Fig. 8 ist eine Gelenkstelle 27 dargestellt. Diese Gelenkstelle wird aus Laschen 28 hergestellt, die aus der Manschettenverlängerung 17 herausgeschnitten sind und dann zylinderförmig gebogen sind. Durch diese zylinderförmig gebogenen Laschen entsteht eine röhrenförmige Lagerstelle, in die ein Stift 29 eingeführt wird, um diesen Stift können dann die beiden Spannabschnitte 14 verschwenkt werden. Die Schwenkbewegung ist durch Anschläge 30 begrenzt. Diese Anschläge befinden sich auf dem Spannabschnittsbereich, der die Wülste umgreift. Die Schwenkbewegung kann durch die Anschläge 30 nur in einem bestimmten Bereich erfolgen, vergl. Fig. 7, so dass der Spannverschluss nur so weit geöffnet werden kann, dass das Schlauchende mit den Wülsten in den Spannverschluss eingeführt werden kann. Dann kann durch Spannung und Bewegung des Verschlusshebels die Befestigung erfolgen, so dass die beiden Wülste abdichtend aneinandergepresst sind.

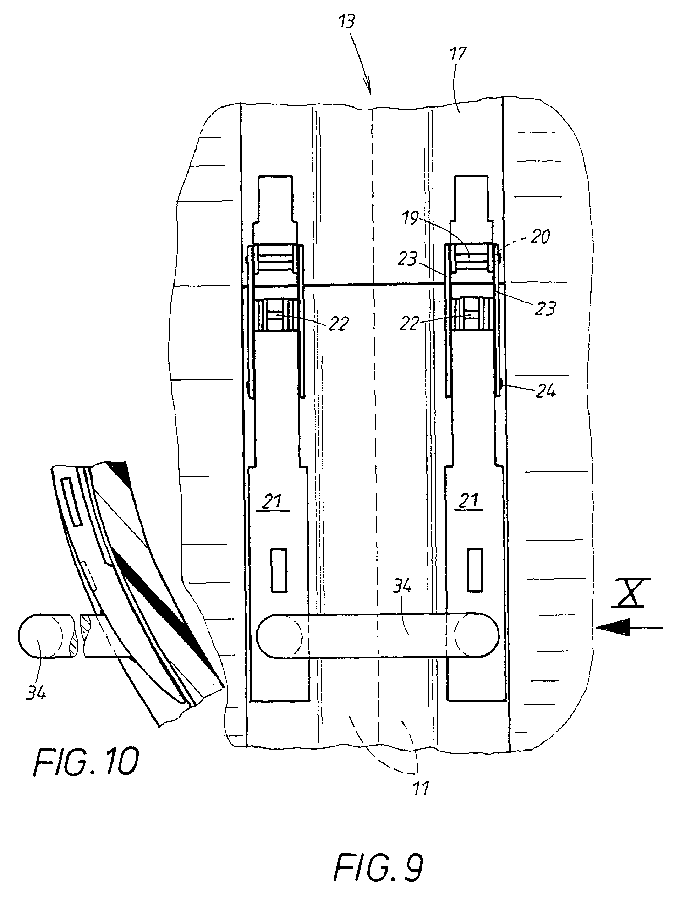

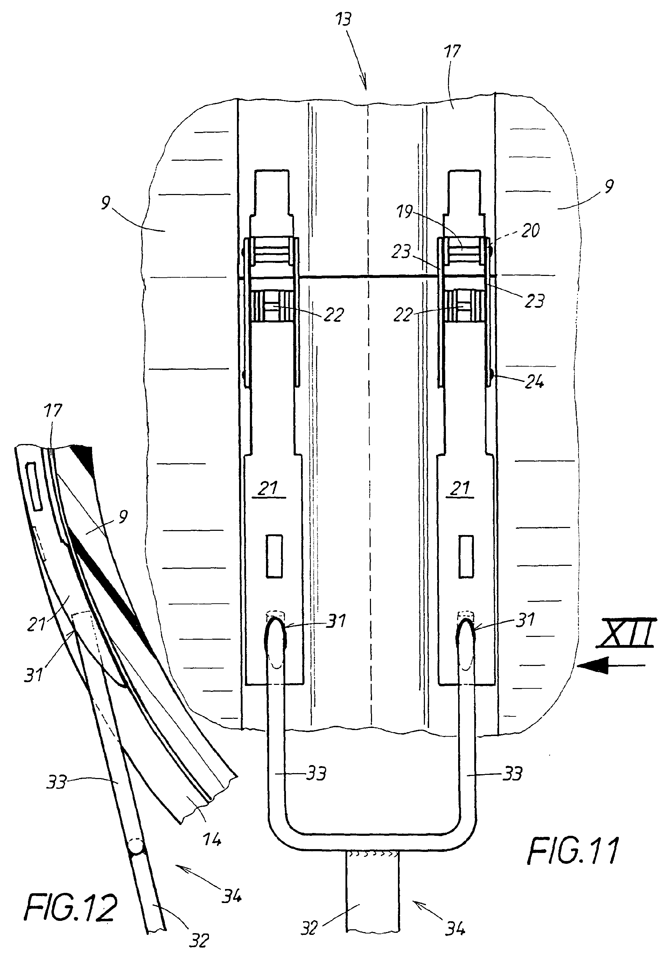

Um eine möglichst rasche und schnelle Bedienung zu erhalten, sind die beiden Verschlusshebel 21 durch ein Griffteil 34 miteinander verbunden, so dass beide Verschlusshebel zugleich in ihre Freigabe als auch in ihre Haltestellung überführbar sind. Wie aus Fig. 10 hervorgeht, ragt der Griffteil über ein Verschlussteil empor. Gegen unbeabsichtigtes Lösen des Verschlussteiles können nicht näher bezeichnete Öffnungen entweder auf der Oberfläche oder an den Seiten des Verschlusshebels zur Aufnahme von Sicherungsstiften verwendet werden. Bei dem Ausführungsbeispiel nach Fig. 11 weist der Verschlusshebel 21 eine Aufnahme 31 auf, in die ein Verlängerungsteil 32 einführbar ist. Durch dieses Verlängerungsteil ist der Griffhebel wesentlich verlängert worden, so dass der Verschlusshebel leichter in seine Öffnungs- und Schließstellung überführbar ist, dies ist insbesondere dann von Bedeutung, wenn Schläuche mit einem Durchmesser von über 20 cm über den Spannverschluss aneinander befestigt werden sollten.

Das eingeführte Verlängerungsteil kann nach Gebrauch wieder herausgezogen werden, so dass es nicht störend bei Benutzung der beiden Schläuche vorliegt. Bei dem vorliegenden Ausführungsbeispiel ist das Verlängerungsteil gabelförmig ausgebildet. Es weist zwei Gabelzinken 33 auf, die jeweils in die Aufnahmen 31 eines Verschlusshebels eingeführt sind. Wiederum ist eine Bedienung beider Verschlusshebel zugleich möglich. Wiederum tritt auch eine Verlängerung auf, durch die die Kraft zum Öffnen oder Schließen des Verschlusshebels reduziert wird. Wesentlich ist aber im vorliegenden Fall auch noch, dass der Griffteil mit seinem freien Ende von dem Spannverschluss bzw. den Wülsten ragt, so dass der Griffteil leicht mit einer Hand bedient werden kann, ohne dass beim Schließen der Spannhebel eine Einklemmung der Hand eines Benutzers erfolgt. Der Griffteil mit den Gabelzinken verläuft je nach Ausbildung etwa tangential oder in einem sehr spitzen Winkel, wie die Fig. 12 zeigt. Wichtig ist auch hier wieder die Entfernbarkeit des Griffteiles.

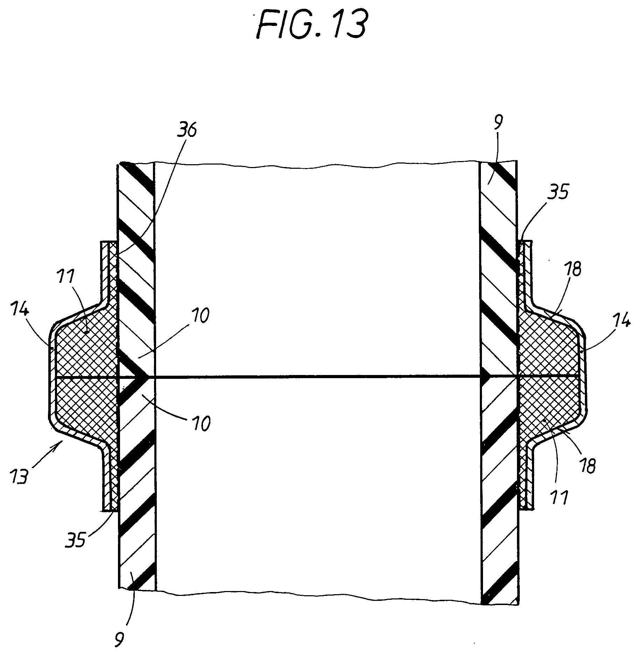

In Fig. 13 ist ein Schlauch 9 dargestellt, dessen Schlauchenden 10 eine Wulst 11 tragen, die unabhängig von dem Schlauch hergestellt ist. Eine solche Wulst braucht auch nicht den gleichen Werkstoff zu haben wie der Schlauch, sondern sie könnte beispielsweise aus Kunststoff hergestellt sein. Die Wulst weist wiederum eine Andrückfläche 18 auf, an die der Spannverschluss 13 angreift.

Die Wulst 11 ist noch mit einer Manschette 35 ausgestattet, die sich an dem Schlauch 11 anschmiegt. Zwischen dem Außenumfang des Schlauches und der Innenseite der Wulst ist eine Klebe- oder Schweißverbindung vorgesehen, um so eine sichere Festlegung zu erhalten. Die beiden Schlauchenden werden dann wiederum, wie schon erwähnt, durch den Spannverschluss zusammengehalten. Im übrigen weist der Aufbau dieses Ausführungsbeispiels eine ähnliche Gestaltung auf, wie die bisher beschriebenen Ausführungsbeispiele. Es wird insoweit auf die Beschreibung verwiesen. Der Spannverschluss hat die übrige Ausbildung wie bereits beschrieben. Der vorherbeschriebene Spannverschluss hat die übrige Ausbildung wie der bereits eingangs beschriebene.

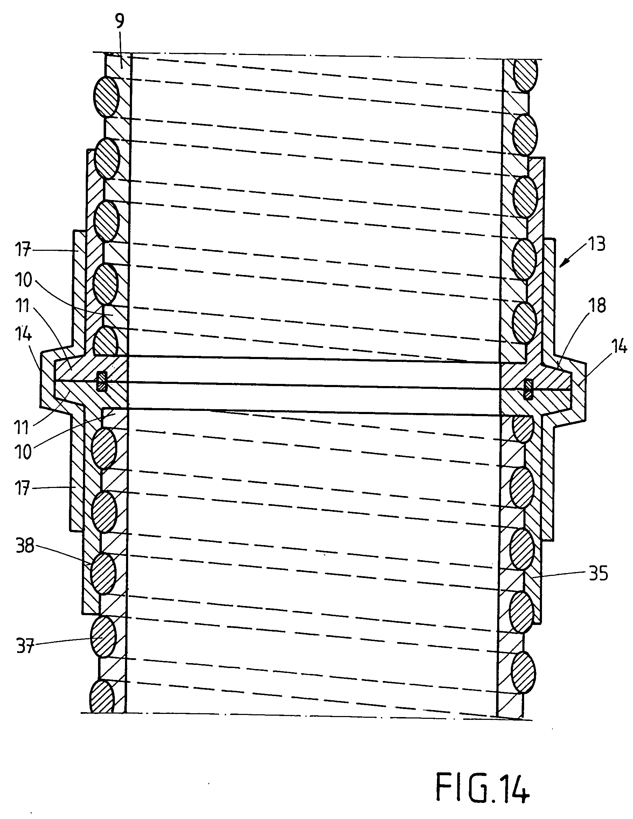

Der in Fig. 14 beschriebene Spannverschluss mit Schlauch 8 weist eine Manschette 35 auf, die mit der Wulst 11 versehen ist.

Der Außenumfang des Schlauches 9 trägt eine gewindeartig verlaufende Erhebung 37. Hier kann die Erhebung aus härterem Material, wie Hart-PVC, sein, das in dem Schlauch selber eingebettet ist, beispielsweise wenn der Schlauch aus einem besonderen Kunststoff hergestellt ist. Die gewindeartig verlaufende Erhebung 37 greift in eine gewindeartig verlaufende Vertiefung 38 am Innenumfang der Manschette 35 der Wulst 11 ein. Die Manschette und die Wulst ist hierbei auch aus Kunststoff gefertigt. Zwischen dem Innenumfang der Manschette sowie dem Außenumfang des Schlauches ist eine Klebeverbindung vorgesehen, hierbei ist die Klebeverbindung 36 so ausgebildet, dass sie erst nach einer gewissen Zeit aushärtet, so dass beim Aufdrehen der Manschette mit der Gewindevertiefung auf den Schlauch die Klebeverbindung als Gleitwerkstoff dienbar ist.

Die Gewindeerhebung könnte aus einem Draht, der eingebettet in dem Schlauch 9 ist, hergestellt sein.

Die Wulst 11 trägt bei diesem Ausführungsbeispiel einen Anschlag 40. Dieser begrenzt die Einschraubbewegung des Schlauches 9 in die Manschette 35. Der Anschlag 40 erstreckt sich soweit, so dass der Innenmantel des Schlauches und der Innendurchmesser des Anschlages die gleiche Größe haben wie auf der Zeichnung zu erkennen ist.

Zwischen zwei benachbarten Wülsten 11 liegen Dichtungsringe 39 in einer Aufnahme der Wulst. Auf diese Weise kann auch bei einem harten Kunststoff eine sichere Abdichtung erzielt werden, wenn der Spannverschluss 13 mit seinen Spannabschnitten 14 um die beiden Wülste gelegt ist.

Es sei hier noch nachgetragen, dass die gewindeartige Erhebung auch so ausgebildet sein kann, dass ein mehrgängiges Gewinde entstehen würde, hierbei würde dann auch die Vertiefung 38 in der Manschette 35 mehrgängig ausgestaltet sein.

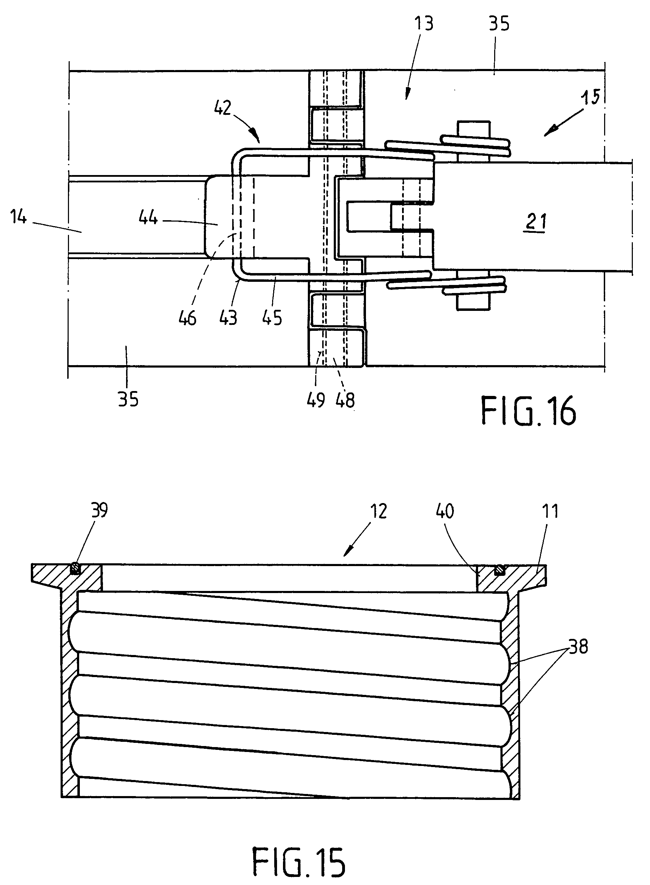

In der Fig. 15 ist die Vertiefung 38 der Manschette 35 mit Wulst 11 einzeln gezeichnet, so dass der Verlauf des Gewindes klar zu erkennen ist, ebenso der radial sich erstreckende Anschlag 40. In Fig. 16 ist der Spannverschluss 13 mit seinen Spannabschnitten 14 dargestellt. Die übrigen Teile, wie Schlauch und Manschette, sind fortgelassen.

Zwei benachbarte Spannabschnitte 14 liegen nebeneinander und greifen verzahnungsartig ineinander. Diese Verzahnungsabschnitte weisen eine Lagerbohrung 49 auf, in die eine Achse 48 einführbar ist, so dass die beiden Abschnitte aneinander halterbar sind. Bei einem Spannabschnittpaar wird die Achse jedoch erst dann eingeführt, wenn der Verschlussteil 15 in seiner Schließstellung ist. Der Verschlussteil weist einen Stahldrahtbügel 42 auf. Dieser Bügel 42 ist über nicht näher bezeichnete Achsstummel an dem einen Spannabschnitt 14 gelagert, während das andere Ende des Bügels, der U-förmig gestaltet ist, mit seinem Mittelsteg 46 einen Keilvorsprung 44 im Bereich des anderen Spannabschnittes 14 hintergreift.

An den Seitenschenkeln 45 des U-förmigen Stahldrahtbügels ist eine nicht näher bezeichnete Federwindung bzw. Federwicklung vorgesehen, die bei Spannung des Verschlussteiles sich leicht zusammenzieht.

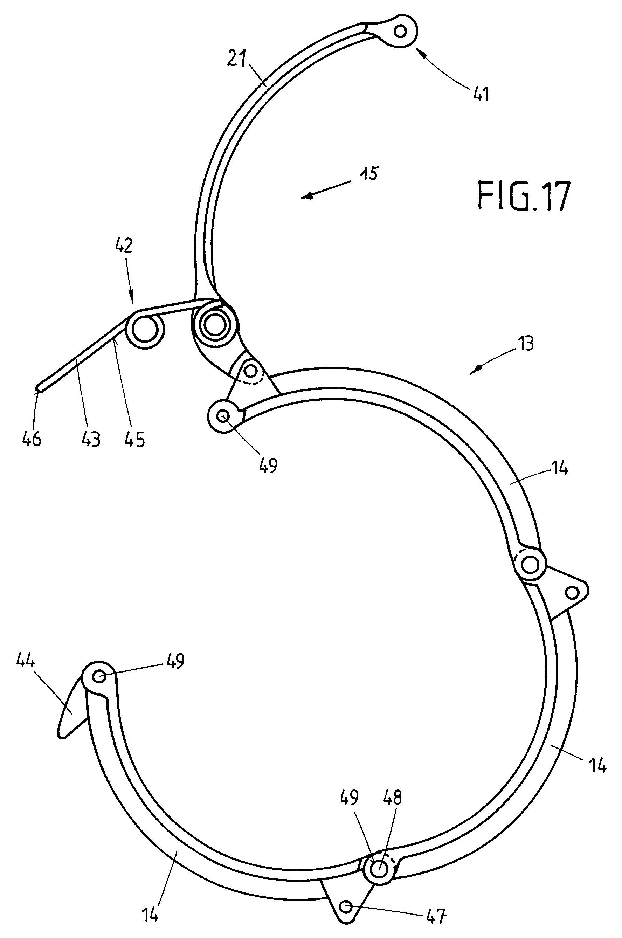

In Fig. 17 ist der Spannverschluss im aufgeklappten Zustand gezeigt. Er besteht aus drei Spannabschnitten 14, die gelenkig aneinander verbindbar sind und zwar, wie schon erwähnt, über die Lagerbohrung 49 und der Achse 48. Wie aus der Zeichnung zu erkennen ist, sind an den Spannabschnitten Lagerböcke vorgesehen. Der eine Lagerbock dient zur schwenkbaren Befestigung des Verschlusshebels 21, der andere Lagerbock weist eine Bohrung auf. Diese Bohrung ist gleich groß einer Bohrung am freien Ende 41 des Verschlusshebels. In die beiden Bohrungen kommt ein Sicherungsstift, um gegen ein unbeabsichtigtes Öffnen bzw. gegen eine unbeabsichtigte Bewegung des Verschlusshebels eine Sicherung zu haben.

Der dritte Lagerbock schließlich weist eine Öffnung auf, mittels der ein Aufhängerabschnitt 47 geschaffen wird. Dieser Aufhängerabschnitt dient beispielsweise zur Lagerung der Spannverschlüsse oder aber, wenn die Spannverschlüsse mit einem Schlauch versehen sind, der in gewissen Höhen verlegt werden soll, zur Befestigung von Drähten od.dgl.

Der Stahldrahtbügel 42 weist, wie schon erwähnt, die Windung auf, die jeweils in den Schenkeln 45 angeordnet ist, um so eine Spannung zu erreichen, wenn der Verschlussteil in seine Verschließstellung überführt wird. Der keilförmige Vorsprung 44 am dritten Spannabschnitt 14 wird von dem Mittelsteg 46, wie aus der Fig. 16 zu ersehen, bei Befestigung hintergriffen. Der Verschlusshebel 21 weist etwa die gleiche Länge wie ein Spannabschnitt 14 auf.

Wie bereits erwähnt, sind die dargestellten Ausführungsformen nur beispielsweise Verwirklichungen der Erfindung. Diese ist nicht darauf beschränkt. Vielmehr sind noch mancherlei Abänderungen und Anwendungen möglich. Beispielsweise könnte die spiralförmige Einlage an ihrem Ende erweitert sein, so dass hierdurch ein Verstärkungsring gebildet würde, der innerhalb der Wulst liegen würde. Auch der Spannhebel selber kann anders ausgebildet werden. Wichtig ist nur, dass die beiden Spannabschnitte aneinandergezogen werden und sich nicht selbsttätig lösen können. Durch die Manschette kann die Wulst auch mittels einer Schraubverbindung festgelegt werden, wodurch sich auch eine sichere Halterung ergibt. Hierbei könnte die Schraubverbindung entweder zwischen Manschette und Schlauch liegen oder aber an der Außenseite der Manschette vorhanden sein, so dass dann die Manschette mit einem Außengewindering festgelegt würde.

### Bezugszeichenliste

- 9: Schlauch
- 10: Schlauchenden
- 11: Wulst
- 12: Verstärkungsring
- 13: Spannverschluss
- 14: Spannabschnitte
- 15: Verschlussteil
- 16: Metallspirale
- 17: Manschettenverlängerungsteile an 13
- 18: Andrückfläche an 11
- 19: stabförmige Halterung von 15
- 20: Haken von 15
- 21: Verschlusshebel von 15
- 22: Schwenkachse von 21
- 23: Platten
- 24: Schwenkachse von 23
- 25: Öse
- 26: Geflecht
- 27: Gelenkstelle
- 28: Laschen
- 29: Stift
- 30: Anschlag
- 31: Aufnahme
- 32: Verlängerungsteil
- 33: Gabelzinke von 34
- 34: Griffteil
- 35: Manschette
- 36: Klebeverbindung
- 37: Gewindeerhebung
- 38: Vertiefung
- 39: Dichtungsring
- 40: Anschlag
- 41: freies Ende von 21
- 42: Stahldrahtverschlussbügel
- 43: Bügelabschnitt
- 44: Keilvorsprung

- 45: Schenkel von 43
- 46: Mittelsteg
- 47: Aufhängerabschnitt
- 48: Achse
- 49: Lagerbohrung

## Patentansprüche

1. Schlauchverbindung zweier einander gegenüberliegenden Enden (10) von elastischen Schläuchen, die an ihrem Endbereich einen nach außen weisenden Absatz tragen und mit einem Spannverschluss (13), der die beiden Schlauchenden lösbar zusammenhält, und die Absätze der Schlauchenden umfasst, hierbei weist der Spannverschluss Spannabschnitte (14) auf, die durch ein Verschlussteil (15) zusammengehalten sind,
**dadurch gekennzeichnet,**
**dass** die Schlauchenden (10) jeweils eine Wulst (11) tragen, die radial nach außen weist und dass die Innenwandung der beiden Schläuche im Bereich der Wulst (11) ohne Verengung ausgebildet ist.

2. Schlauchverbindung nach Anspruch 1, **dadurch gekennzeichnet, dass** die Wülste (11) an den Schlauchenden (10) angeformt sind.

3. Schlauchverbindung nach Anspruch 1 oder 2, **dadurch gekennzeichnet, dass** die Wulst (11) in ihrem Inneren einen Verstärkungsring (12) trägt.

4. Schlauchverbindung nach Anspruch 1 oder 3, **dadurch gekennzeichnet, dass** die Wulst (11) nachträglich am Schlauchende (10), insbesondere durch Schweißen, Kleben und/oder Schrauben befestigbar ist.

5. Schlauchverbindung nach Anspruch 4, **dadurch gekennzeichnet, dass** die Wulst (11) eine sich in Richtung des Schlauches (9) erstreckende Manschette (35) trägt, die am Schlauch (9) festgelegt ist.

6. Schlauchverbindung nach Anspruch 5, **dadurch gekennzeichnet, dass** die Manschette (35) zumindest bereichsweise einen Gewindeabschnitt trägt.

7. Schlauchverbindung nach Anspruch 4 oder 5, **dadurch gekennzeichnet, dass** der Schlauch (9) an seinem Außenumfang eine gewindeartig verlaufende Erhebung (37) trägt, dass die Manschette (35) an ihrem Innenmantel eine gewindeartig verlaufende Vertiefung (38) aufweist, in die die Erhebung (37) eingreift.

8. Schlauchverbindung nach Anspruch 4 oder 7, **dadurch gekennzeichnet, dass** die gewindeartig am Außenumfang des Schlauches verlaufende Erhebung (37) als Einlage aus Hart-PVC aufgebaut ist.

9. Schlauchverbindung nach Anspruch 4 oder 7, **dadurch gekennzeichnet, dass** die gewindeartig verlaufende Erhebung (37) am Außenmantel des Schlauches (9) als ummantelter eingebetteter Draht ausgebildet ist.

10. Schlauchverbindung nach einem der Ansprüche 1 bis 9, **dadurch gekennzeichnet, dass** Wulst (11) und Manschette (35) und/oder der Schlauch (9) aus Kunststoff oder Gummi aufgebaut ist.

11. Schlauchverbindung nach einem der Ansprüche 1 bis 10, **dadurch gekennzeichnet, dass** wenigstens eine der beiden einander- zugewandten Seiten zwei benachbarter Wülste (11) einen gummielastischen Dichtungsring (39) aufweist.

12. Schlauchverbindung nach einem der Ansprüche 1 bis 11, dadurch gezeichnet, dass am Innenmantel der als Bauteil am Schlauch festlegbaren Wulst (11) ein radial zum Innenmantel sich erstreckender rundumlaufender Anschlag (40) als Anschlagbegrenzung für den Schlauch (9) angeordnet ist.

13. Schlauchverbindung nach Anspruch 12, **dadurch gekennzeichnet, dass** die radiale Erstreckung des Anschlages (40) der Dicke des Schlauches (9) entspricht.

14. Schlauchverbindung nach einem der Ansprüche 1 bis 13, **dadurch gekennzeichnet, dass** die Manschette (35) sich mit einer Länge am Schlauch (9) erstreckt, die eine Verformung zweier Schläuche an ihrer Verbindungsstelle verhindert.

15. Schlauchverbindung nach einem der Ansprüche 4,7 bis 10, **dadurch gekennzeichnet, dass** zwischen Manschette (35) und Schlauch (9) im Bereich der gewindeartigen Erhebung (37) und Vertiefung (38) eine Klebeschicht (36) vorgesehen ist.

16. Schlauchverbindung nach Anspruch 15, **dadurch gekennzeichnet, dass** die Klebeschicht (30) einen Zeitabschnitt zum Aushärten benötigt, um so bei der Aufschraubung von Wulst (11) und Manschette (35) auf den Schlauch (9) ein flüssiges Gleitmittel zu bilden.

17. Schlauchverbindung nach einem der Ansprüche 1 bis 16, **dadurch gekennzeichnet, dass** die Schläuche (9) in ihrem Mantel wenigstens eine Metallspirale (16) tragen, die sich in die Wulst hinein erstreckt und an dem Verstärkungsring (12) befestigt ist.

18. Schlauchverbindung nach einem der Ansprüche 1 bis 16, **dadurch gekennzeichnet, dass** die Schläuche (9) in ihrem Mantel ein Geflecht (26), insbesondere ein Metallgeflecht, aufweisen, das bis in die Wulst (12) hinein vorgesehen ist.

19. Schlauchverbindung nach einem der Ansprüche 1 bis 18, **dadurch gekennzeichnet, dass** die Wulst (11) in ihrem Inneren den Verstärkungsring (12) trägt, der im axialen Schnitt rechteckig gestaltet ist.

20. Schlauchverbindung nach einem der Ansprüche 1 bis 19, **dadurch gekennzeichnet, dass** der Verstärkungsring (12) aus Endbereichen der Spirale (16) und/oder des Geflechtes (26) aufgebaut ist.

21. Schlauchverbindung nach einem der Ansprüche 1 bis 20, **dadurch gekennzeichnet, dass** die beiden Enden (10) eines Schlauches (9) gleich ausgebildet sind und jeweils eine Wulst (11) aufweisen.

22. Schlauchverbindung nach einem der Ansprüche 1 bis 21, **dadurch gekennzeichnet, dass** die Wülste (11) auf der dem Schlauchende (10) abgewandten Seite eine Anpressschräge (18) für den Spannverschluss (13) aufweisen.

23. Schlauchverbindung nach einem der Ansprüche 1 bis 22, **dadurch gekennzeichnet, dass** der wenigstens zweigeteilte Spannverschluss (13) in Achsrichtung des Schlauches (9) sich erstreckende, vom Schlauchende (10) wegweisenden Manschettenverlängerungsteile (17) trägt, hierbei umgreifenden die Verlängerungsteile (17) den Schlauch (9).

24. Schlauchverbindung nach Anspruch 23, **dadurch gekennzeichnet, dass** der Spannverschluss (13) als Spritzgussteil aufgebaut ist.

25. Schlauchverbindung nach einem der Ansprüche 1 bis 24, **dadurch gekennzeichnet, dass** der Spannverschluss (13) einen einzigen Verschlusshebel (21) trägt, der in axialer Richtung des Spannverschluss mittig am Spannabschnitt (14) angeordnet ist.

26. Schlauchverbindung nach einem der Ansprüche 1 bis 25, **dadurch gekennzeichnet, dass** der Verschlusshebel (21) bei einem aus drei Spannabschnitten (14) bestehenden Spannverschluss (13) etwa gleich lang wie der Umfang eines Spannabschnittes (14) ist..

27. Schlauchverbindung nach Anspruch 25 oder 26, **dadurch gekennzeichnet, dass** das freie Ende (41) des Verschlusshebels (21) am Spannabschnitt (14) gegen eine unbeabsichtigte Bewegung des Verschlusshebels (21) über ein Sicherungsteil festlegbar ist.

28. Schlauchverbindung nach einem der Ansprüche 1 bis 27, **dadurch gekennzeichnet, dass** an einem Spannabschnitt der schwenkbar gelagerter Verschlusshebel (21) mit einem schwenkbaren Stahldrahtverschlussbügel (42) vorgesehen ist, der mit einem Bügelabschnitt (43) einen am benachbarten Spannabschnitt (14) vorgesehenen Keilvorsprung (44) in der Verschlussstellung des Verschlusses federnd hintergreift.

29. Schlauchverbindung nach Anspruch 28, **dadurch gekennzeichnet, dass** der Stahldrahtbügel U-förmig gestaltet ist, hierbei weisen die beiden Schenkel (45) eine Federwindung auf, durch die bei der Befestigung des Spannverschlusses der Mittelsteg (46) federnd den Keilvorsprung (44) hintergreift.

30. Schlauchverbindung nach einem der Ansprüche 1 bis 29, **dadurch gekennzeichnet, dass** der Spannverschluss (13) einen Aufhängerabschnitt (47) zur Befestigung und/oder Aufhängen des Spannverschlusses aufweist.

31. Schlauchverbindung nach einem der Ansprüche 1 bis 30, **dadurch gekennzeichnet, dass** benachbarte Spannabschnitte (14) schwenkbar aneinander gelagert sind, hierbei weisen die beiden Spannabschnitte eine gemeinsame Lagerbohrung auf, die von einer Achse (48) durchgriffen ist.

32. Schlauchverbindung nach einem der Ansprüche 1 bis 31, **dadurch gekennzeichnet, dass** der Außendurchmesser des Schlauches (9) gleich dem Innendurchmesser der halbzylinderartigen Manschettenverlängerung (17) ist.

33. Schlauchverbindung nach einem der Ansprüche 1 bis 32, **dadurch gekennzeichnet, dass** die Manschettenverlängerung (17) den Spannverschluss (13) trägt.

34. Schlauchverbindung nach einem der Ansprüche 1 bis 33, **dadurch gekennzeichnet, dass** die Gelenkstelle (27) zweier Spannabschnitte (14) aus an deren Berührstelle an der Manschettenverlängerung (17) vorgesehenen, zylinderartig gebogenen Laschen (28) besteht, in die ein Stift (29) als Lagerachse eingesetzt ist.

35. Schlauchverbindung nach einem der Ansprüche 1 bis 34, **dadurch gekennzeichnet, dass** im Bereich der Gelenkstelle (27) die Enden der Spannabschnitte (14) einen Anschlag (30) zur Begrenzung der Schwenkbewegung der Spannabschnitte (14) tragen.

36. Schlauchverbindung nach einem der Ansprüche 1 bis 35, **dadurch gekennzeichnet, dass** die beiden Verschlusshebel (21) an der Manschettenverlängerung (17) über ein Griffteil (34) miteinander verbunden sind.

37. Schlauchverbindung nach einem der Ansprüche 1 bis 36, **dadurch gekennzeichnet, dass** die Verschlusshebel (21) eine Aufnahme (31) für ein Verlängerungsteil (32) des Griffteiles (34) aufweisen zur lösbaren Festlegung des Verlängerungsteiles (32).

38. Schlauchverbindung nach Anspruch 37, **dadurch gekennzeichnet, dass** der Verlängerungsteil (32) gabelartig ausgebildet ist und je eine Gabelzinke (33) in die Aufnahme (31) einführbar ist.
